# EUROPÄISCHE PATENTSCHRIFT

(11) **EP 1 840 007 B1**
(45) Veröffentlichungstag und Bekanntmachung des Hinweises auf die Patenterteilung: **05.10.2011**
(21) Anmeldenummer: 07005522.3
(22) Anmeldetag: 17.03.2007
(51) Int. Cl.: B62D 27/02

(54) **Verbindungsanordnung von Trägerelementen einer Fahrzeugkarosserie**
Connection assembly of support elements for a car body
Dispositif de liaison d'éléments porteurs d'une carrosserie de véhicule automobile

(30) Priorität: 31.03.2006 DE 102006014980
(43) Veröffentlichungstag der Anmeldung: 03.10.2007
(73) Patentinhaber: Dr. Ing. h.c. F. Porsche AG, 70435 Stuttgart (DE)
(72) Erfinder: Schiebel, Dieter, 70825 Korntal-Münchingen (DE); Lippold, Andrea, 70499 Stuttgart (DE); Soellner, Michael, 71120 Grafenau-Döffingen (DE)

(56) Entgegenhaltungen:
- EP-A- 1 502 691
- WO-A-98/18670
- WO-A-02/055363
- DE-C1- 10 225 577
- FR-A- 2 843 078
- JP-A- 5 319 304
- JP-A- 11 348 812
- US-A- 6 010 155
- US-A1- 2006 085 966

## Beschreibung

Die vorliegende Erfindung bezieht sich auf eine Verbindungsanordnung von Trägerelementen einer Fahrzeugkarosserie, gemäß Oberbegriff des Patentanspruchs 1.

Obwohl auf beliebige Fahrzeuge und Fahrzeugkarosserien anwendbar, werden die vorliegende Erfindung sowie die ihr zugrunde liegende Problematik in Bezug auf eine Verbindungsanordnung eines Längsträgers und eines Knotenbauteils einer Fahrzeugkarosserie näher erläutert.

Die WO 02/055363 A 2 zeigt eine solche Verbindungsanordnung von mindestens zwei Trägerelementen einer Fahrzeugkarosserie. Ein erstes Trägerelement umgibt ein zweites Trägerelement zumindest abschnittsweise zur Bildung eines Überlappungsbereiches von Seitenwänden der beiden Trägerelemente. Das erste Trägerelement weist im Überlappungsbereich mindestens eine Ausnehmung zur Bildung einer zwischen den Seitenwänden vorgesehenen Verbindungsstelle für eine Anbindung des zweiten Trägerelementes auf. Eine erste Verbindungsstelle ist in einem Abstand zu einem jeweiligen korrespondierenden Rand der Seitenwände angeordnet und verläuft in einem Winkel zur Längsachse des zweiten Trägerelementes (7) in einer vorher festlegbaren Länge. Eine zweite Verbindungsstelle ist auf der dem Rand gegenüberliegenden Seite der ersten Verbindungsstelle in einem Abstand angeordnet.

Verbindungsanordnungen sind im modernen Fahrzeugkarosseriebau bekannt und umfassen im Wesentlichen Anordnungen von Verbindungen von beispielsweise Längs-, Querträgern und Knotenbauteilen, die einerseits die erforderliche Steifigkeit und Festigkeit der Fahrzeugkarosserie sicherstellen und andererseits bei einem Fahrzeugaufprall durch Deformationen der einzelnen Träger Aufprallenergien aufnehmen, wobei sich die Träger zum Energieabbau in einer bestimmten Weise zusammenfalten. Derartige Verbindungen sind häufig so gestaltet, dass ein Bauteil ein anderes, mit dem es zu verbinden ist, in einem bestimmten, so genannten Überlappungsbereich, umgibt. Zum Beispiel weist ein Knotenbauteil einen U-förmigen Abschnitt auf, in den ein Längsträger in einer bestimmten Länge eingesetzt wird, wobei die Ränder der Enden des U-förmigen Abschnitts des Knotenbauteils mit dem Längsträger verschweißt werden. Die Schweißnaht kann zu einem Teil eine Kerbwirkung in den Bauteilen hervorrufen, woraus sich bei Kraftaufnahme, beispielsweise bei einem Aufprall des Fahrzeugs, Knickstellen durch Steifigkeitssprünge an den Schweißstellen ergeben können und die Energieaufnahme durch gezielte Deformation der Trägerelemente nicht oder nur zum Teil erfolgt.

Zur Verminderung solcher Steifigkeitssprünge sind die Ränder der Enden der zu verbindenden Bauteile schräg ausgebildet worden, so dass auch die Verbindungsschweißnähte schräg verlaufen und einen reduzierten Steifigkeitssprung in den Bauteilen ergeben. Als Illustration derartiger schräg verlaufender Schweißnähte sei das Dokument JP 03065475 A genannt, welches eine Verbindungsanordnung von Längsträgern einer Fahrzeugkarosserie zeigt, die in U-förmiger Ausbildung in einem Überlappungs- bzw. Fügebereich schräg verlaufende Schweißungen aufweisen.

Bei diesen Lösungen wird es jedoch als nachteilig empfunden, dass eine Verminderung eines Steifigkeitssprungs, insbesondere bei Karosseriebauteilen in Leichtmetallausführung, nicht immer ausreichend ist. Es besteht der Bedarf für eine verbesserte Verbindungsanordnung dieser Bauteile.

Somit liegt der vorliegenden Erfindung die Aufgabe zugrunde, eine Verbindungsanordnung von Trägerelementen einer Fahrzeugkarosserie zu schaffen, welche gegenüber vorbekannten Strukturen eine verbesserte Reduzierung von Steifigkeitssprüngen und eine verbesserte Festigkeit schafft.

### VORTEILE DER ERFINDUNG

Diese Aufgabe wird erfindungsgemäß durch die Verbindungsanordnung mit den Merkmalen gemäß Patentanspruch 1 gelöst.

Die der vorliegenden Erfindung zugrunde liegende Idee besteht darin, dass bei der Verbindungsanordnung von mindestens zwei Trägerelementen einer Fahrzeugkarosserie, wobei ein erstes Trägerelement ein zweites Trägerelement zumindest abschnittsweise zur Bildung von Überlappungsbereichen von Seitenwänden der Trägerelemente umgibt, und wobei das erste Trägerelement im Überlappungsbereich mindestens eine Ausnehmung zur Bildung einer zwischen den Seitenwänden vorgesehenen Verbindungsstelle für eine Anbindung des zweiten Trägerelementes aufweist. Dadurch werden eine verbesserte Reduzierung von Steifigkeitssprüngen und eine verbesserte Festigkeit der Verbindung geschaffen. Die vorliegende Erfindung weist gegenüber den oben genannten Ansätzen den Vorteil auf, dass mehrere unter einem Winkel zueinander verlaufende Verbindungsstellen in der Verbindung angeordnet sind, wobei der Kraftverlauf durch die verbundenen Bauteile eine günstigere Aufteilung aufweist und die Festigkeit der Verbindungsanordnung verbessert ist. Die erfindungsgemäße Verbindungsanordnung ist mit Verbindungsstellen in einem Abstand zu dem jeweiligen korrespondierenden Rand der Seitenwände versehen, die sich in einem Winkel zur Längsachse eines Trägerelementes in einer vorher festlegbaren Länge erstrecken. Vorteilhaft dabei ist insbesondere, dass sich die Verbindungsstellen im Wesentlichen parallel zu dem jeweiligen korrespondierenden Rand erstrecken, um somit einen günstigen Steifigkeitssprung zu erzielen, insbesondere innerhalb eines längeren Bereichs als im Stand der Technik.

Bei entsprechenden Berechnungen hat sich herausgestellt, dass die Verbindungsstellen in den Seitenwänden ohne Verschweißungen der Ränder einen verbesserten reduzierten Steifigkeitssprung ergeben.

Die Verbindungsstellen sind in einer bevorzugten Ausführung stoffschlüssig ausgebildet, wobei sie jeweils die Form eines Langlochs in der äußeren Seitenwand des umgebenden Bauteils aufweisen, deren innere Ränder umlaufend mit dem darunter liegenden Bauteil verschweißt sind. Diese umlaufende Verschweißung hat den Vorteil einer weiteren geringeren Kerbwirkung. Außerdem verlaufen zwei Abschnitte der umlaufenden Schweißnaht parallel in einem Abstand und ergeben so einen verbesserten Kraftübergang.

In den Unteransprüchen finden sich vorteilhafte Ausgestaltungen und Verbesserungen der im Patentanspruch 1 angegebenen Verbindungsanordnung.

In einer alternativen Ausführung ist die Verbindungsanordnung dadurch gekennzeichnet, dass die Verbindungsstellen formschlüssig als Stanznietverbindungen ausgebildet sind.

### ZEICHNUNGEN

Die Erfindung wird im Folgenden anhand von Ausführungsbeispielen unter Bezugnahme auf die beiliegenden Figuren der Zeichnung näher erläutert.

### Von den Figuren zeigen:

- Figur 1: eine perspektivische Ansicht einer Verbindungsanordnung gemäß einem bevorzugten Ausführungsbeispiel der vorliegenden Erfindung;
- Figur 2: eine weitere perspektivische Ansicht der Verbindungsanordnung nach Figur 1; und
- Figur 3: eine vergrößerte Draufsicht einer Verbindungsstelle gemäß einem bevorzugten Ausführungsbeispiel der vorliegenden Erfindung.

### BESCHREIBUNG BEVORZUGTER AUSFÜHRUNGSBEISPIELE

In den Figuren der Zeichnung bezeichnen dieselben Bezugszeichen gleiche oder funktionsgleiche Komponenten, soweit nichts Gegenteiliges angegeben ist.

Zur Orientierung in den Figuren dienen Koordinatensysteme mit den Koordinaten x, y, und z, wobei x die Fahrzeuglängsrichtung, y die Fahrzeugquerrichtung und z die Fahrzeughochrichtung bezeichnen.

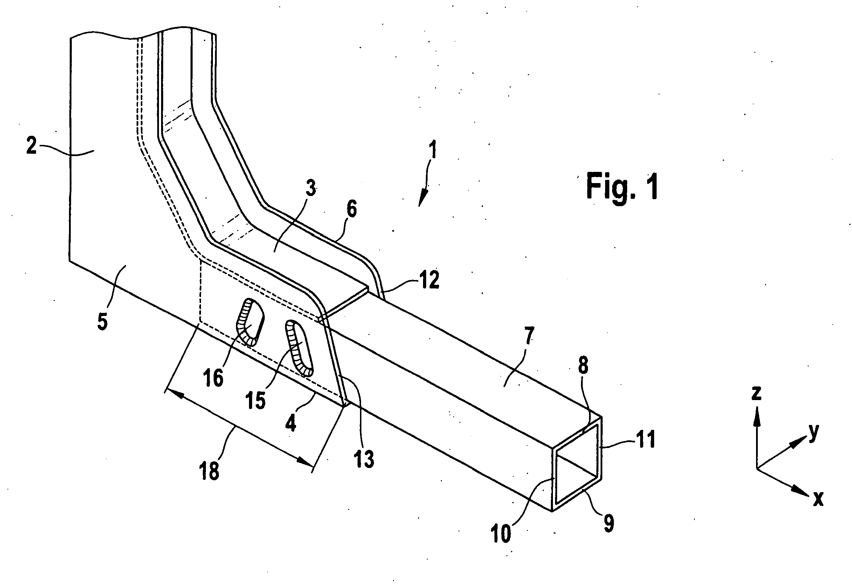

Figur 1 stellt eine perspektivische Ansicht einer Verbindungsanordnung 1 eines Abschnitts einer Fahrzeugkarosserie mit einem ersten Trägerelement 2 und einem zweiten Trägerelement 7 dar. Hierbei ist in dem gezeigten Ausführungsbeispiel das erste Trägerelement 2 als ein Knotenbauteil, beispielsweise ein Gussteil für eine Federbeinaufnahme, und das zweite Trägerelement 7 als ein Längsträger als Hohlprofil mit rechteckigem Querschnitt ausgebildet. Hierbei kann der Querschnitt auch ein vieleckiges Profil sein, beispielsweise sechseckig, achteckig, etc. oder ein anderes.

Das erste Trägerelement 2 besitzt in seinem vorderen Abschnitt eine U-förmige Aufnahme mit einer Unterseite 4 und einer linken und rechten Seite 5, 6. In diesem Beispiel ist eine Oberseite 3 vorhanden, welche zum Beispiel nachträglich angebracht werden kann.

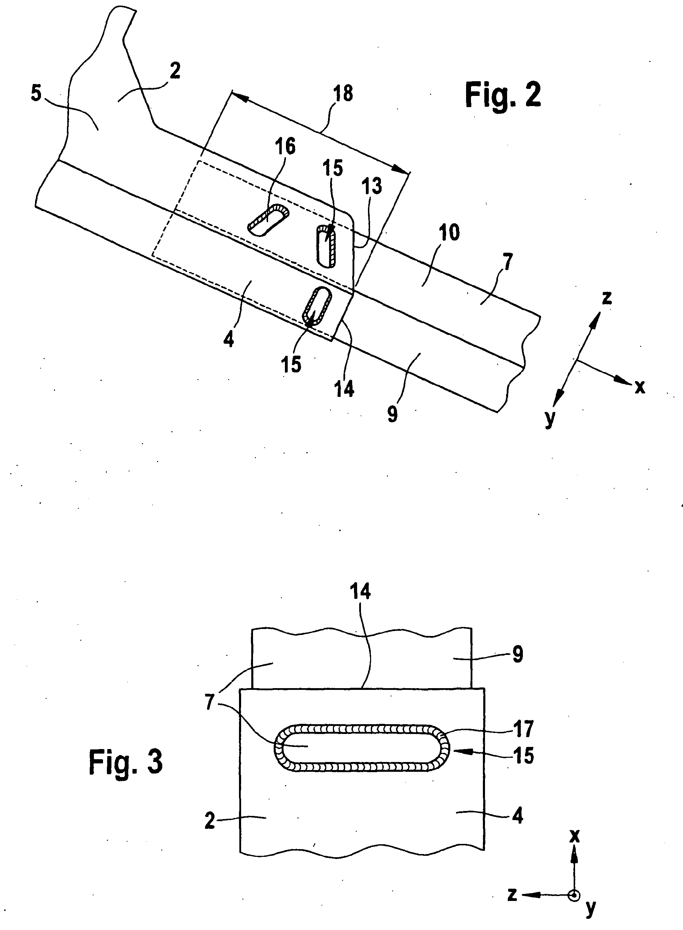

Die Enden der Seiten 4, 5 und 6 weisen Ränder 12, 13, 14 (siehe auch Figur 2) auf, welche in Bezug auf die Längsachse (x-Richtung) dieses Abschnitts des ersten Trägerelementes 2 zum Teil abgeschrägt sind, das heißt sie verlaufen in einem Winkel zur x-Richtung.

In die U-förmige Aufnahme, die zwischen der Unterseite 4 und den Seiten 5 und 6 gebildet ist, ist ein Endabschnitt des zweiten Trägerelementes 7 eingesetzt. Seine Einsatzlänge bestimmt die Länge eines so genannten Überlappungsbereichs 18, der von den Rändern 12, 13, 14 im Bereich der gestrichelten Linien verläuft, welche das innerhalb des ersten Trägerelementes 2 liegende Ende des zweiten Trägerelementes 7 andeutet.

An den Seiten 3, 4, 5, 6 im Überlappungsbereich 18 der beiden Trägerelemente 2, 7 sind Verbindungsstellen 15, 16 angeordnet, welche jeweils eine Verbindung einer außen liegenden Seitenwand 3, 4, 5, 6 des ersten Trägerelementes mit einer jeweils darunter angeordneten Seitenwand 8, 9, 10, 11 des zweiten Trägerelementes 7 bilden.

Eine erste Verbindungsstelle 15 ist in einem Abstand zum schräg verlaufenden Rand 13 der Seite 5 des ersten Trägerelementes 2 angeordnet. Ihre Anordnung ist vorzugsweise so gewählt, dass sie sich im Wesentlichen parallel zum Rand 13 in einer bestimmten Länge im gleichen Winkel zur Längsachse in x-Richtung des Überlappungsbereichs 18 erstreckt. Dabei korrespondiert ihre Länge zu der Breite der darunter liegenden Seitenwand 10 des zweiten Trägerelementes 7.

In dem dargestellten Ausführungsbeispiel ist eine zweite Verbindungsstelle 16 im Verlauf auf der Seite der ersten Verbindungsstelle 15 angeordnet, die dem Rand 13 gegenüber liegt. Diese zweite Verbindungsstelle 16 weist bevorzugt die gleiche Länge wie die erste Verbindungsstelle 15 auf, ist jedoch spiegelbildlich zu der letzteren angeordnet, wodurch sich ein besonders vorteilhafter reduzierter Steifigkeitssprung der Verbindungsanordnung ergibt.

In der Figur 2 ist die Darstellung nach Figur 1 aus einer anderen Perspektive gezeigt. Die Unterseite 4 des ersten Trägerelementes 2 weist nur eine erste Verbindungsstelle 15 auf, die parallel zum Rand 14 in einem Abstand vorgesehen ist. Auch hier kann eine weitere, zweite Verbindungsstelle 16 angeordnet sein.

Die Verbindungsstellen 15, 16 sind in einer Ausführungsform als stoffschlüssige Verbindungen ausgeführt. Hierzu zeigt die Figur 3 eine vergrößerte Darstellung des Bereichs des Rands 14 aus Figur 2. Die erste Verbindungsstelle 15 verläuft parallel zum Rand 14 in der Unterseite 4 des ersten Trägerelementes 2 und weist eine Ausnehmung auf, welche vorzugsweise in Gestalt eines Langlochs ausgebildet ist. Das Langloch durchdringt die Seitenwand des ersten Trägerelementes 2 vollständig. Ein Langloch hat keine scharfe Eckübergänge, sondern ist an den kurzen Seiten abgerundet. Es ist bevorzugt, dass dieser umlaufende innere Rand des Langlochs des ersten Trägerelementes 2 mit einer umlaufenden Schweißnaht 17 mit dem darunter angeordneten zweiten Trägerelement 7 stoffschlüssig verbunden ist. Bei einer maschinellen Erstellung der Schweißnaht 17 ist eine hohe Qualität der Schweißnaht zu erzielen, wodurch der Steifigkeitssprung positiv beeinflusst wird.

In einer alternativen Ausführungsform sind die Verbindungsstellen 15, 16 als formschlüssige Verbindungen ausgeführt, zum Beispiel als Stanznietverbindungen. Auch diese verlaufen in der gleichen Richtung wie die stoffschlüssigen Verbindungen.

Durch die Anordnung der zusätzlichen Verbindungsstellen 15, 16 wird ein vorteilhaft reduzierter Steifigkeitssprung in der Verbindungsanordnung erreicht, welcher auf einen relativ großen Bereich, nämlich den Überlappungsbereich, verteilt ist. Daraus ergeben sich auch verbesserte Festigkeitseigenschaften der Verbindungsanordnung.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Beispielweise ist die Erfindung nicht auf die beschriebenen rechteckigen Hohlprofile beschränkt. Es können selbstverständlich Profile mit anderem Querschnittsaufbau zur Anwendung kommen.

So können zum Beispiel mehr als zwei zusätzliche Verbindungsstellen 15, 16 vorgesehen sein.

Bei einer Seitenwand von geringer Breite ist die zugehörige Verbindungsstelle 15, 16 entsprechend mit einer geringeren Länge ausgebildet. Sie kann dabei beispielsweise auch kreisförmig sein.

Auch sind die Verbindungsstellen 15, 16 mit anderen Winkelwerten ausführbar.

Eine Kombination von stoffschlüssigen und formschlüssigen Verbindungsstellen 15, 16 ist auch denkbar.

Die stoffschlüssigen Verbindungsstellen 15, 16 können auch als Punktschweißverbindungen ausgeführt sein.

Auch eine zusätzliche Verschweißung der Ränder 12, 13, 14 ist denkbar.

## Patentansprüche

1. Verbindungsanordnung (1) von mindestens zwei Trägerelementen (2, 7) einer Fahrzeugkarosserie, wobei ein erstes Trägerelement (2) ein zweites Trägerelement (7) zumindest abschnittsweise zur Bildung von Überlappungsbereichen (18) von Seitenwänden (3, 8; 4, 9; 5, 10; 6, 11) der Trägerelemente (2, 7) umgibt, wobei das erste Trägerelement (2) im Überlappungsbereich (18) mindestens eine Ausnehmung zur Bildung einer zwischen den Seitenwänden (3, 8; 4, 9; 5, 10; 6, 11) vorgesehenen Verbindungsstelle (15, 16) für eine Anbindung des zweiten Trägerelementes (7) aufweist, wobei eine erste Verbindungsstelle (15) in einem Abstand zu einem jeweiligen korrespondierenden Rand (13, 14) der Seitenwände (5, 6) angeordnet ist und sich in einem Winkel zur Längsachse des zweiten Trägerelementes (7) in einer vorher festlegbaren Länge erstreckt, und wobei eine zweite Verbindungsstelle (16) auf der dem Rand (13, 14) gegenüberliegenden Seite der ersten Verbindungsstelle (15) in einem Abstand angeordnet ist, **dadurch gekennzeichnet, dass** die zweite Verbindungsstelle (16) in einem Winkel zu der ersten Verbindungsstelle (15) angeordnet ist.

2. Verbindungsanordnung (1) nach Anspruch 1, **dadurch gekennzeichnet, dass** die erste Verbindungsstelle (15) im Wesentlichen parallel zu dem jeweiligen korrespondierenden Rand (13, 14) angeordnet ist.

3. Verbindungsanordnung (1) nach Anspruch 1, **dadurch gekennzeichnet, dass** die zweite Verbindungsstelle (16) spiegelbildlich zu der ersten Verbindungsstelle (15) angeordnet ist.

4. Verbindungsanordnung (1) nach einem der Ansprüche 1 bis 3, **dadurch gekennzeichnet, dass** die Verbindungsstellen (15, 16) stoffschlüssig oder/und formschlüssig ausgebildet sind.

5. Verbindungsanordnung (1) nach Anspruch 4, **dadurch gekennzeichnet, dass** die Ausnehmung der stoffschlüssigen Verbindungsstelle (15, 16) in der jeweiligen außen liegenden Seitenwand (3, 4, 5, 6) des ersten Trägerelementes (2) ausgebildet ist und die jeweilige Seitenwand (3, 4, 5, 6) durchdringt, und wobei der innen liegende Rand der Ausnehmungen mit der jeweiligen darunter liegenden Seitenwand (10, 11, 12, 13) verschweißt ist.

6. Verbindungsanordnung (1) nach Anspruch 5, **dadurch gekennzeichnet, dass** die Ausnehmungen der Verbindungsstellen (15, 16) in Form eines Langlochs ausgebildet sind.

7. Verbindungsanordnung (1) nach einem der Ansprüche 4 bis 6, **dadurch gekennzeichnet, dass** die formschlüssigen Verbindungsstellen (15, 16) als Stanznietverbindungen ausgebildet sind.

8. Verbindungsanordnung (1) nach Anspruch 7, **dadurch gekennzeichnet, dass** die Verbindungsstellen (15, 16) der Stanznietverbindungen in Form eines Langlochs angeordnet sind.

## Claims

1. Connection arrangement (1) of at least two support elements (2, 7) of a vehicle body, wherein a first support element (2) surrounds a second support element (7) at least in portions to form overlapping regions (18) of side walls (3, 8; 4, 9; 5, 10; 6, 11) of the support elements (2, 7), wherein the first support element (2) has in the overlapping region (18) at least one cutout to form a connection point (15, 16) provided between the side walls (3, 8; 4, 9; 5, 10; 6, 11) for attaching the second support element (7), wherein a first connection point (15) is arranged at a distance from a respective corresponding edge (13, 14) of the side walls (5, 6) and extends at an angle to the longitudinal axis of the second support elements (7) over a predeterminable length, and wherein a second connection point (16) is arranged on the side of the first connection point (15) opposed to the edge (13, 14) and at a distance, **characterized in that** the second connection point (16) is arranged at an angle to the first connection point (15).

2. Connection arrangement (1) according to Claim 1, **characterized in that** the first connection point (15) is arranged substantially parallel to the respective corresponding edge (13, 14).

3. Connection arrangement (1) according to Claim 1, **characterized in that** the second connection point (16) is arranged in a mirror-inverted manner with respect to the first connection point (15).

4. Connection arrangement (1) according to one of Claims 1 to 3, **characterized in that** the connection points (15, 16) are formed in an integrally bonded and/or positively locking manner.

5. Connection arrangement (1) according to Claim 4, **characterized in that** the cutout of the integrally bonded connection point (15, 16) is formed in the respective outer side wall (3, 4, 5, 6) of the first support element (2) and penetrates the respective side wall (3, 4, 5, 6), and wherein the inner edge of the cutouts is welded to the respective underlying side wall (10, 11, 12, 13).

6. Connection arrangement (1) according to Claim 5, **characterized in that** the cutouts of the connection points (15, 16) take the form of a slot.

7. Connection arrangement (1) according to one of Claims 4 to 6, **characterized in that** the positively locking connection points (15, 16) are formed as punch rivet connections.

8. Connection arrangement (1) according to Claim 7, **characterized in that** the connection points (15, 16) of the punch rivet connections are arranged in the form of a slot.

## Revendications

1. Dispositif de liaison (1) d'au moins deux éléments porteurs (2, 7) d'une carrosserie de véhicule, un premier élément porteur (2) entourant un deuxième élément porteur (7) au moins en partie pour former des zones de recouvrement (18) des parois latérales (3, 8 ; 4, 9 ; 5, 10 ; 6, 11) des éléments porteurs (2, 7), le premier élément porteur (2) présentant, dans la zone de recouvrement (18), au moins un évidement pour former un point de liaison (15, 16) prévu entre les parois latérales (3, 8 ; 4, 9 ; 5, 10 ; 6, 11) pour un accolage du deuxième élément porteur (7), un premier point de liaison (15) étant disposé à une certaine distance d'un bord (13, 14) correspondant respectif des parois latérales (5, 6) et s'étendant selon un angle déterminé par rapport à l'axe longitudinal du deuxième élément porteur (7) dans une longueur pouvant être déterminée à l'avance et un deuxième point de liaison (16) étant disposé à une certaine distance sur le côté opposé au bord (13, 14) du premier point de liaison (15), **caractérisé en ce que** le deuxième point de liaison (16) est disposé selon un angle défini par rapport au premier point de liaison (15).

2. Dispositif de liaison (1) selon la revendication 1, **caractérisé en ce que** le premier point de liaison (15) est disposé pour l'essentiel parallèlement au bord (13, 14) correspondant respectif.

3. Dispositif de liaison (1) selon la revendication 1, **caractérisé en ce que** le deuxième point de liaison (16) est disposé en miroir par rapport au premier point de liaison (15).

4. Dispositif de liaison (1) selon l'une quelconque des revendications 1 à 3, **caractérisé en ce que** les points de liaison (15, 16) sont réalisés par complémentarité de matières et/ou par complémentarité de formes.

5. Dispositif de liaison (1) selon la revendication 4, **caractérisé en ce que** l'évidement du point de liaison (15, 16) réalisé par complémentarité de matières est réalisé dans la paroi latérale (3, 4, 5, 6) extérieure respective du premier élément porteur (2) et traverse la paroi latérale (3, 4, 5, 6) respective, et le bord intérieur des évidements étant soudé à la paroi latérale (10, 11, 12, 13) inférieure respective.

6. Dispositif de liaison (1) selon la revendication 5, **caractérisé en ce que** les évidements du point de liaison (15, 16) prennent la forme d'un trou oblong.

7. Dispositif de liaison (1) selon l'une quelconque des revendications 4 à 6, **caractérisé en ce que** les points de liaison réalisés par complémentarité de formes (15, 16) prennent la forme de liaisons rivetées par estampage.

8. Dispositif de liaison (1) selon la revendication 7, **caractérisé en ce que** les points de liaison (15, 16) des liaisons rivetées par estampage prennent la forme d'un trou oblong.
